# FASCICULE DE BREVET EUROPEEN

(11) **EP 3 546 309 B1**
(45) Date de publication et mention de la délivrance du brevet: **26.04.2023**
(21) Numéro de dépôt: 19160820.7
(22) Date de dépôt: 05.03.2019
(51) Int. Cl.: B60W 30/14, B60W 50/14, B60W 30/18, G08G 1/095, G08G 1/096, B60W 50/00

(54) **PROCÉDÉ ET DISPOSITIF D'ASSISTANCE À LA CONDUITE D'UN VÉHICULE LORS D'UN PASSAGE DE FEU TRICOLORE, EN FONCTION DU PROFIL DU CONDUCTEUR**
VERFAHREN UND VORRICHTUNG ZUR FAHRERASSISTENZ BEIM PASSIEREN EINER AMPEL ABHÄNGIG VON EINEM FAHRERPROFIL
METHOD AND DEVICE FOR VEHICLE DRIVING ASSISTANCE WHEN PASSING A TRAFFIC LIGHT, DEPENDING ON A PROFILE OF THE DRIVER

(30) Priorité: 30.03.2018 FR 1852794
(43) Date de publication de la demande: 02.10.2019
(73) Titulaire: PSA Automobiles SA, 78300 Poissy (FR)
(72) Inventeur: MAFRICA, Stefano, 75013 PARIS 13 (FR); DUPERRAY, Delphine, 92360 MEUDON (FR); BENSATOR, Saleh, 92130 ISSY LES MOULINEAUX (FR)

(56) Documents cités:
- EP-A1- 2 945 140
- DE-A1-102013 226 195
- DE-A1-102015 005 902
- FR-A1- 3 045 545

## Description

L'invention concerne les véhicules, éventuellement de type automobile, et plus précisément l'assistance à la conduite de tels véhicules.

On notera que le véhicule peut être éventuellement à conduite au moins partiellement automatisée (ou autonome), et dans ce cas il peut être conduit manuellement par son conducteur pendant des phases de conduite manuelle et de façon au moins partiellement automatisée (avec une intervention au mieux partielle de son conducteur) pendant des phases de conduite automatisée.

La conduite d'un véhicule en présence d'au moins un feu tricolore sur une portion de voie de circulation peut poser des problèmes au conducteur, car ce dernier ne sait pas quand ce feu tricolore va changer de phase de lumière (notamment d'une phase de lumière rouge à une phase de lumière verte et d'une phase de lumière verte à une phase de lumière orange).

Ainsi, il arrive fréquemment qu'au moment où le véhicule arrive au niveau d'un feu tricolore ce dernier passe d'une phase de lumière verte à une phase de lumière orange qui oblige son conducteur à l'arrêter, ce qui n'est pas toujours possible compte tenu de sa vitesse en cours et/ou de sa capacité de freinage et/ou des conditions météorologiques et/ou des conditions de circulation et/ou du temps de réaction du conducteur.

De même, il arrive fréquemment que le conducteur d'un véhicule aperçoive de loin qu'un feu tricolore est dans une phase de lumière rouge mais qu'il ne freine son véhicule qu'au dernier moment en induisant son arrêt, alors qu'un ralentissement anticipé du véhicule aurait pu permettre au feu tricolore de passer en phase de lumière verte sans arrêt, et donc aurait amélioré le confort du conducteur et provoqué une réduction de la consommation d'énergie.

On connait par le document EP2945140 un système et procédé de fonctionnement d'un véhicule autonome.

Afin d'assister les conducteurs lors du passage à un feu tricolore, il a été proposé d'équiper les feux tricolores d'un module de communication émettant par voie d'ondes, à destination des véhicules voisins, des messages contenant des informations définissant les durées respectives de leurs trois phases de lumière (rouge, verte et orange) et la durée restante de la phase de lumière en cours. Ainsi, et comme proposé dans le document brevet US 8,972,076, on peut déterminer dans un véhicule s'approchant d'un feu tricolore émetteur s'il existe une vitesse limite inférieure à une vitesse maximale autorisée sur la voie de circulation empruntée et permettant de passer ce feu tricolore pendant une phase de lumière verte en cours définie par les informations émises, et dans l'affirmative on peut proposer cette vitesse limite déterminée au conducteur (libre à lui d'en tenir compte ou non).

Ce type d'assistance au conducteur s'avère cependant moyennement intéressant du fait que la vitesse limite déterminée ne prend pas en compte des paramètres importants, et en particulier le profil de conduite du conducteur, lequel est vraiment concerné par les phases de passage aux feux tricolores, et qu'il ne propose pas de solution lorsqu'il n'est pas possible de déterminer une vitesse limite du fait d'un passage imminent en phase de lumière rouge. En outre, proposer un conseil ou profil de vitesse qui ne correspond pas au profil de conduite du conducteur, risque de lui causer un désagrément ou de l'empêcher de passer au feu vert.

L'invention a notamment pour but d'améliorer la situation.

Selon la présente invention, ledit but est résolu par un procédé d'assistance selon la revendication 1 et un dispositif d'assistance selon la revendication 7.

On dispose ainsi dans le véhicule soit d'une vitesse limite permettant de passer le feu tricolore sans s'arrêter en offrant un confort de conduite maximal au conducteur pour une consommation d'énergie minimale, soit d'un profil de vitesse décroissant permettant de s'arrêter au feu tricolore avec un minimum d'attente et en offrant un confort de conduite maximal au conducteur pour une consommation d'énergie minimale.

Le procédé d'assistance selon l'invention peut comporter d'autres caractéristiques qui peuvent être prises séparément ou en combinaison, et notamment :
- dans son étape on peut commencer par calculer une gamme de vitesses permettant au véhicule de passer le feu tricolore pendant la phase de lumière verte en cours, puis on peut déterminer si cette gamme de vitesses est applicable compte tenu des contraintes dynamiques du véhicule, du profil de conduite du conducteur, des informations de circulation devant le véhicule et de la vitesse maximale autorisée, et dans l'affirmative on peut déterminer et proposer une vitesse limite comprise dans cette gamme de vitesses déterminée, tandis que dans la négative on peut déterminer et proposer le profil de vitesse décroissant ;
   > dans son étape on peut calculer la gamme de vitesses en fonction d'une distance en cours séparant le véhicule du feu tricolore, d'une distance de sécurité et d'au moins une durée restant avant l'expiration de la phase de lumière en cours ;
- dans son étape on peut proposer la vitesse limite déterminée au conducteur et/ou à des moyens de contrôle équipant le véhicule et contrôlant au moins la vitesse de ce dernier pendant une phase de conduite au moins partiellement automatisée ;
- dans son étape, lorsque la voie de circulation est intersectée par une autre voie de circulation juste après le feu tricolore et que le véhicule s'apprête à tourner dans cette autre voie de circulation, on peut déterminer la vitesse limite en fonction également d'une vitesse maximale dans le tournant ;
- dans son étape, lorsque la voie de circulation est intersectée par une autre voie de circulation juste après le feu tricolore et qu'elle comprend au moins un autre feu tricolore placé à côté de ce dernier et contrôlant l'accès à cette autre voie de circulation, on peut déterminer la vitesse limite en fonction également d'une information de direction à suivre fournie par le conducteur ou d'un état en cours d'un indicateur de changement de direction du véhicule ou encore d'un historique de données acquises représentatives d'une habitude de direction prise à cette intersection par le véhicule ;
   ➢ dans son étape, le mode d'accélération/décélération peut être sélectionné par le conducteur ou déterminé en fonction d'un historique de données acquises représentatives d'accélérations/décélérations du véhicule pendant des phases de conduite manuelle du véhicule par le conducteur.

L'invention propose également un véhicule, éventuellement de type automobile, et comprenant, d'une part, un module de communication échangeant des messages par voie d'ondes et propre à se déplacer sur une voie de circulation comprenant au moins un feu tricolore comportant un module de communication émettant par voie d'ondes des messages contenant des informations définissant les durées respectives de trois phases de lumières rouge, verte et orange et la durée restante de la phase de lumière en cours, et, d'autre part, un dispositif d'assistance du type de celui présenté ci-avant.

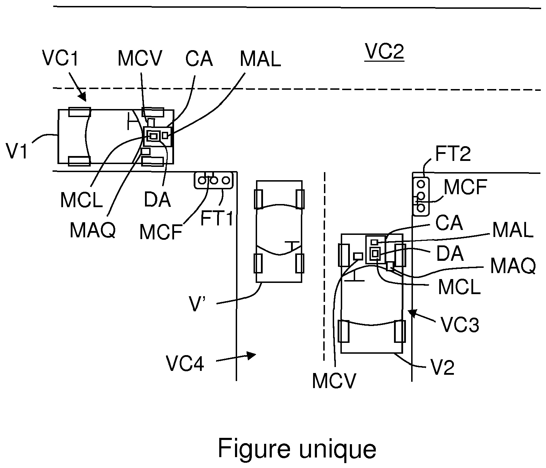

D'autres caractéristiques et avantages de l'invention apparaîtront à l'examen de la description détaillée ci-après, et du dessin annexé, sur lequel l'unique figure illustre schématiquement et fonctionnellement une intersection entre voies de circulation sur lesquelles circulent des véhicules (équipés pour deux d'entre eux d'un dispositif d'assistance selon l'invention).

L'invention a notamment pour but de proposer un procédé d'assistance, et un dispositif d'assistance DA associé, destinés à permettre d'assister la conduite d'un véhicule Vk lors d'un passage d'un feu tricolore FTj associé à une voie de circulation VCm.

Dans ce qui suit, on considère, à titre d'exemple non limitatif, que le véhicule Vk est de type automobile. Il s'agit par exemple d'une voiture. Mais l'invention n'est pas limitée à ce type de véhicule. Elle concerne en effet tout type de véhicule pouvant circuler sur des voies de circulation terrestres. Ainsi, elle concerne également et notamment les motocyclettes, les autocars, les camions, les véhicules utilitaires, les engins de voirie et les engins de chantier.

On notera que le véhicule Vk peut être éventuellement à conduite au moins partiellement automatisée (ou autonome), et dans ce cas il peut être conduit manuellement par son conducteur pendant des phases de conduite manuelle et de façon au moins partiellement automatisée (avec une intervention au mieux partielle de son conducteur) pendant des phases de conduite automatisée.

On a schématiquement représenté sur l'unique figure une intersection entre une première route, comprenant des première VC1 (m = 1) et deuxième VC2 (m = 2) voies de circulation, et une seconde route comprenant des troisième VC3 (m = 3) et quatrième VC4 (m = 4) voies de circulation. Un premier véhicule V1 (k = 1) circule sur la première voie de circulation VC1. Un deuxième véhicule V2 (k = 2) circule sur la troisième voie de circulation VC3. Un troisième véhicule V' circule sur la quatrième voie de circulation VC4. On notera que sur l'unique figure la première route (VC1, VC2) est intersectée par la seconde route (VC3, VC4), et l'accès à cette intersection est contrôlé par un premier feu tricolore FT1 (j = 1) associé à la première voie de circulation VC1 et par un second feu tricolore FT2 (j = 2) associé à la troisième voie de circulation VC3. Après le passage du premier feu tricolore FT1 le premier véhicule V1 peut ici soit continuer tout droit en restant sur la première voie de circulation VC1, soit tourner à droite pour circuler sur la quatrième voie de circulation VC4. Après le passage du second feu tricolore FT2 le deuxième véhicule V2 peut ici soit tourner à droite pour circuler sur la première voie de circulation VC1, soit tourner à gauche pour circuler sur la deuxième voie de circulation VC2.

Chaque feu tricolore FTj intervenant dans l'invention comprend un module de communication MCF agencé de manière à au moins émettre par voie d'ondes des messages contenant des informations qui définissent les durées respectives d'une phase de lumière rouge, d'une phase de lumière verte et d'une phase de lumière orange, ainsi que la durée restante dr de la phase de lumière en cours.

Dans ce qui suit, on considère, à titre d'exemple non limitatif, que les véhicules Vk (k = 1 ou 2) sont équipés chacun d'un dispositif d'assistance DA selon l'invention et d'un module de communication MCV capable d'échanger des messages par voie d'ondes. Ces messages sont échangés avec les feux tricolores FTj, ainsi qu'éventuellement avec d'autres véhicules ou avec une station d'information.

De préférence, les communications par voie d'ondes se font à courte portée, par exemple en utilisant le standard de communication sans fil Car2X ou V2X ou Bluetooth ou WiFi (notamment 802.11a à 802.11n ou ITS G5 (802.11p)) ou cellulaire xG / LTE (notamment LTE_V ou 5G).

Comme évoqué précédemment, l'invention propose notamment un procédé d'assistance destiné à permettre d'assister la conduite d'un véhicule Vj. Ce procédé comprend une étape qui peut être mise en oeuvre au moins partiellement par un dispositif d'assistance DA selon l'invention comprenant, comme illustré sur l'unique figure, des moyens de calcul MCL.

On notera que dans l'exemple illustré non limitativement sur l'unique figure, le dispositif d'assistance DA (et en particulier ses moyens de calcul MCL) fait (font) partie d'un calculateur CA, assurant éventuellement au moins une autre fonction au sein d'un véhicule Vk, comme par exemple la supervision de la chaîne de transmission. Mais le dispositif d'assistance DA pourrait être un appareil électronique embarqué dans un véhicule Vk et comportant son propre calculateur. Par conséquent, le dispositif d'assistance DA peut être réalisé sous la forme de module(s) logiciel(s) (ou informatique(s) ou encore « software »), ou bien d'une combinaison de circuits électroniques (ou « hardware ») et de module(s) logiciel(s).

L'étape du procédé d'assistance, selon l'invention, est déclenchée lorsque le module de communication MCV d'un véhicule Vk, circulant sur une voie de circulation VCm, associée à un feu tricolore FTj (muni d'un module de communication MCF) et ayant une vitesse maximale vmaxₘ autorisée dans la portion contenant ce feu tricolore FTj, reçoit de ce dernier (FTj) des informations définissant les durées respectives de ses trois phases de lumière (rouge, verte et orange) et la durée restante dr de sa phase de lumière en cours.

Dans cette étape, on commence par déterminer, en fonction de contraintes dynamiques de ce véhicule Vk, d'un profil de conduite de son conducteur et d'informations de circulation devant ce véhicule Vk, s'il existe une vitesse limite vlim inférieure à cette vitesse maximale vmaxₘ et permettant au véhicule Vk de passer le feu tricolore FTj, associé à cette voie de circulation VCm, pendant une phase de lumière verte en cours définie par les informations émises par ce feu tricolore FTj. Cette détermination est réalisée par les moyens de calcul MCL du dispositif d'assistance DA du véhicule Vk.

Par exemple, les contraintes dynamiques du véhicule Vk peuvent être sa capacité à accélérer et sa capacité à décélérer (par son système de freinage et/ou son frein moteur), éventuellement en tenant compte d'informations sur l'état de la route (notamment le coefficient de frottement en cours), lesquelles peuvent être transmises par voie d'ondes (notamment en V2X) ou par tout autre moyen (par exemple par des bases de données).

Selon la présente invention, le profil de conduite du conducteur est représentatif d'un mode d'accélération/décélération du conducteur. Ce mode peut, par exemple, être dynamique (ou sportif) lorsque le conducteur aime accélérer/décélérer fortement, ou standard (ou automatique) lorsque le conducteur aime accélérer/décélérer de façon modérée, ou encore prudent (ou économique) lorsque le conducteur aime accélérer/décélérer faiblement.

On notera que ce mode d'accélération/décélération peut, par exemple, être sélectionné par le conducteur (au moyen d'une interface homme/machine) dans une liste affichée sur un écran du véhicule Vk (par exemple celui du combiné central installé dans ou sur la planche de bord), ou bien être déterminé automatiquement (par exemple par apprentissage par les moyens de calcul MCL) en fonction d'un historique de données acquises représentatives d'accélérations/ décélérations du véhicule Vk pendant des phases de conduite manuelle du véhicule Vk par le conducteur. On peut donc, par exemple, fournir des profils de vitesse / accélération / décélération prédéfinis en fonction de modes de conduite prédéfinis.

Egalement par exemple, les informations de circulation devant le véhicule Vk peuvent être représentatives de la vitesse en cours d'un autre véhicule situé devant le véhicule Vk (déterminée par des moyens d'analyse de l'environnement MAL embarqués dans ce dernier (Vk) ou fournie par cet autre véhicule), ou bien d'une vitesse moyenne en cours du trafic (fournie par une station d'information communicante ou par le feu tricolore FTj).

La vitesse maximale autorisée vmaxₘ est fournie soit par un dispositif d'aide à la navigation embarqué dans le véhicule Vk, soit par des moyens d'analyse de l'environnement MAL embarqués dans ce dernier (Vk), soit encore par le feu tricolore FTj.

Puis, si l'on a réussi à déterminer une vitesse limite vlim (et donc dans l'affirmative), on propose cette vitesse limite déterminée vlim, tandis que dans la négative (c'est-à-dire si l'on n'a pas réussi à déterminer une telle vitesse limite vlim), on détermine et propose un profil de vitesse décroissant pvd permettant d'arrêter le véhicule Vk à proximité du feu tricolore FTj. Cette éventuelle proposition de la vitesse limite déterminée vlim est réalisée par les moyens de calcul MCL du dispositif d'assistance DA du véhicule Vk. De même, ces éventuelles détermination et proposition d'un profil de vitesse décroissant pvd sont réalisées par les moyens de calcul MCL du dispositif d'assistance DA du véhicule Vk.

Ainsi, on dispose dans le véhicule Vk soit d'une vitesse limite vlim permettant de passer le feu tricolore FTj sans s'arrêter (et donc pendant une phase de lumière verte) en offrant un confort de conduite maximal au conducteur (correspondant à son profil de conduite) pour une consommation d'énergie minimale, soit d'un profil de vitesse décroissant pvd permettant de s'arrêter au feu tricolore FTj pendant une phase de lumière rouge avec un minimum d'attente et en offrant un confort de conduite maximal au conducteur (correspondant à son profil de conduite) pour une consommation d'énergie minimale.

On notera que dans l'étape du procédé on peut commencer par calculer une gamme de vitesses gv (comprise entre une vitesse minimale vgmin et une vitesse maximale vgmax) permettant au véhicule Vk de passer le feu tricolore FTj pendant la phase de lumière verte en cours. Puis, on peut déterminer si cette gamme de vitesses gv est applicable compte tenu des contraintes dynamiques du véhicule Vk, du profil de conduite du conducteur, des informations de circulation devant le véhicule Vk et de la vitesse maximale autorisée vmaxₘ. Puis, dans l'affirmative (c'est-à-dire si la gamme de vitesses gv permet de ne pas s'arrêter), on peut déterminer et proposer une vitesse limite vlim comprise dans cette gamme de vitesses gv déterminée. En revanche, dans la négative (c'est-à-dire si la gamme de vitesses gv impose de s'arrêter), on peut déterminer et proposer le profil de vitesse décroissant pvd.

Ces calcul, déterminations et proposition sont réalisés par les moyens de calcul MCL du dispositif d'assistance DA du véhicule Vk.

Par exemple, dans l'étape du procédé on peut calculer la gamme de vitesses gv en fonction d'une distance en cours dvf séparant le véhicule Vk du feu tricolore FTj, d'une distance de sécurité ds, et d'au moins la durée dr restant avant l'expiration de la phase de lumière en cours du feu tricolore FTj (laquelle fait partie des informations transmises par ce dernier (FTj)). La distance de sécurité ds correspond à une distance permettant au conducteur de freiner et de s'arrêter en toute sécurité si le feu n'est toujours pas passé au vert (par exemple en raison d'un dysfonctionnement). Cette distance peut, par exemple, être calculée en prenant en compte un temps de réaction du conducteur et une décélération minimale, lesquels peuvent également et éventuellement dépendre du mode de conduite / apprentissage du comportement du conducteur), ainsi qu'éventuellement en fonction de la vitesse en cours du véhicule Vk et d'un temps d'arrêt minimal, qui peut être lui-même calculé en fonction de la capacité de décélération minimale du véhicule Vk.

A titre d'exemple, pendant une phase de lumière rouge, la vitesse minimale vgmin de la gamme de vitesses gv peut être égale à dvf/(dr + dr'), où dr' est la durée restant avant l'expiration de la phase de lumière verte qui suivra la phase de lumière rouge en cours, et la vitesse maximale vgmax de la gamme de vitesses gv peut être égale à (dvf - ds)/dr. Pendant une phase de lumière verte on peut avoir vgmin = dvf/dr et vgmax = (dvf-ds)/(dr+dr').

La fréquence de transmission des informations (notamment dr et dr') par les feux tricolores FTj pouvant être relativement faible (par exemple 1 Hz) et/ou certains messages d'information pouvant ne pas être reçus par le véhicule Vk, il est avantageux que le dispositif d'assistance DA de ce dernier (Vk) effectue en interne une mise à jour d'au moins la durée restante dr, par exemple au moyen d'une temporisation dédiée qui est alors mise à jour à chaque réception d'un message d'information.

Un algorithme simplifié de détermination de la vitesse limite vlim en fonction des trois phases de lumière est décrit ci-après à titre d'exemple purement illustratif.

Dans la phase de lumière rouge, on a vgmax = (dvf - ds)/dr. Si vgmax est utilisable (par exemple du fait que l'on a vlim_min < vgmax < vlim_max, où vlim_min et vlim_max sont des vitesses minimum et maximum fonction du profil de conduite du conducteur, alors vlim = vgmax et de = inf (où de est une distance cible pour une loi de contrôle d'une régulation distance/vitesse par rapport au véhicule qui précède) et inf signifie qu'il n'y a pas de cible et donc que la loi de contrôle précitée ne prend en compte que la vitesse). On notera que l'on peut en plus respecter une gamme d'accélération acceptable par le conducteur : amin < (vgmax - Vv)/Tdecel < amax (où amin est l'accélération minimale acceptable, amax est l'accélération maximale acceptable, Vv est la vitesse en cours du véhicule et Tdecel est une durée de décélération par exemple égale à Vv/amin)). Sinon, si vgmax > vlim_max et que l'on a reçu des informations définissant la phase de lumière suivante, alors on effectue la procédure relative à la phase de lumière verte, et autrement on impose vlim = vlim_max et de = inf. Maintenant, si vgmax n'est pas utilisable, alors on impose vlim = 0 et de = dvf.

Dans la phase de lumière verte, on a vgmin = dvf/(dr + dr'). Si vgmin est utilisable (par exemple du fait que l'on a vlim_min < vgmin < vlim_max), alors vlim = vgmin et de = inf. Sinon, si vgmin > vlim_max et que l'on a reçu des informations définissant la phase de lumière suivante, alors on effectue la procédure relative à la phase de lumière orange, et autrement on impose vlim = 0 et de = dvf.

Dans la phase de lumière orange, si l'on a reçu des informations définissant la phase de lumière suivante, alors on effectue la procédure relative à la phase de lumière rouge. Sinon, on impose vlim = 0 et de = 0.

On notera que dans l'étape du procédé on (les moyens de calcul MCL) peu(ven)t proposer la vitesse limite déterminée vlim au conducteur et/ou à des moyens de contrôle qui équipent le véhicule Vk et contrôlent au moins la vitesse de ce dernier (Vk) pendant une phase de conduite au moins partiellement automatisée.

De tels moyens de contrôle déterminent des commandes pour des organes impliqués dans les déplacements du véhicule Vk, propres à faire circuler ce dernier à la vitesse qu'ils ont déterminée (ou qui leur est proposée (ici vlim)). On notera que ces moyens de contrôle peuvent être également et éventuellement capables de déterminer la trajectoire que va devoir suivre le véhicule V et des commandes d'organes permettant au véhicule Vk de suivre cette trajectoire déterminée. Ces organes font partie d'un ensemble comprenant le groupe motopropulseur (ou GMP), le système de freinage, la direction assistée électrique et les moyens de changement de vitesse (par exemple une boîte de vitesses automatique ou robotisée).

Ces moyens de contrôle peuvent éventuellement faire partie du calculateur CA, voire du dispositif d'assistance DA. Mais cela n'est pas obligatoire. En effet, ils peuvent faire partie d'un autre calculateur embarqué ou bien comprendre un autre calculateur embarqué.

A titre d'exemples les moyens de contrôle peuvent assurer une fonction de régulation de vitesse (éventuellement adaptative) ou une fonction de limitation de vitesse au sein du véhicule Vk.

La vitesse limite déterminée vlim peut être proposée au conducteur au moyen d'un message textuel affiché sur un écran du véhicule Vk (par exemple celui du combiné central ou celui du tableau de bord) et/ou d'un message sonore diffusé par au moins un haut-parleur du véhicule Vk. De même, le profil de vitesse décroissant pvd peut être proposé au conducteur au moyen d'un message textuel affiché sur un écran du véhicule Vk (par exemple celui du combiné central ou celui du tableau de bord) et/ou d'un message sonore diffusé par au moins un haut-parleur du véhicule Vk.

On notera également que dans l'étape du procédé, lorsque la voie de circulation VCm est intersectée par une autre voie de circulation VCm' (avec m' ≠ m) juste après le feu tricolore FTj (comme dans l'exemple de l'unique figure), et que le véhicule Vk s'apprête à tourner dans cette autre voie de circulation VCm', on (les moyens de calcul MCL) peu(ven)t déterminer la vitesse limite vlim en fonction également d'une vitesse maximale dans ce tournant. On comprendra en effet que plus l'angle du tournant (ou virage) est grand, plus la vitesse maximale du véhicule Vk dans ce tournant devra être petite et donc plus la vitesse limite vlim sera petite. La valeur de l'angle du tournant peut, par exemple, être fournie par une station d'information communicante ou par le feu tricolore FTj ou encore par un dispositif d'aide à la navigation embarqué dans le véhicule Vk.

On notera également que d'autres paramètres additionnels peuvent être éventuellement utilisés pour déterminer (ou calculer) la vitesse limite vlim. Ces autres paramètres additionnels peuvent venir d'option(s) ou de préférence(s) sélectionnée(s) par le conducteur ou d'informations reçues d'autres véhicules voisins et/ou d'une station d'information voisine. Ainsi, il peut par exemple s'agir d'une vitesse conseillée du fait des conditions de circulation et/ou de la météorologie et/ou de l'état de la route.

On notera également que dans l'étape du procédé, lorsque la voie de circulation VCm est intersectée par une autre voie de circulation VCm' (avec m' ≠ m) juste après le feu tricolore FTj (comme dans l'exemple de l'unique figure), et qu'elle comprend au moins un autre feu tricolore FTj' (avecj' ≠ j) placé à côté de ce dernier (FTj) et contrôlant l'accès à cette autre voie de circulation VCm', on (les moyens de calcul MCL) peu(ven)t déterminer la vitesse limite vlim en fonction également d'une information de direction à suivre fournie par le conducteur, ou d'un état en cours d'un indicateur de changement de direction (ou clignotant) du véhicule Vk, ou encore d'un historique de données acquises représentatives d'une habitude de direction prise à cette intersection par le véhicule Vk.

L'information de direction à suivre peut être fournie par le conducteur verbalement ou bien par sélection (au moyen d'une interface homme/machine) dans une liste (contenant par exemple les options de direction « tout droit », « à droite » et « à gauche ») affichée sur un écran du véhicule Vk (par exemple celui du combiné central ou celui du tableau de bord), à l'initiative du dispositif d'assistance DA.

L'historique de données acquises peut, par exemple, être fourni par un dispositif d'aide à la navigation embarqué dans le véhicule Vk. On comprendra en effet que si le conducteur décide systématiquement de continuer tout droit (ou de tourner à gauche (ou à droite)) après un feu tricolore FTj, la probabilité qu'il prenne encore la même décision est très élevée. On notera que le dispositif d'assistance DA peut éventuellement demander au conducteur de confirmer (verbalement ou par sélection) la direction à suivre, déterminée en fonction de son habitude de direction prise à l'intersection considérée et qui lui est proposée.

Si l'indicateur de changement de direction n'est pas activé par le conducteur, cela peut signifier qu'il veut continuer tout droit après le feu tricolore FTj. En revanche si l'indicateur de changement de direction est activé à droite par le conducteur, cela peut signifier qu'il veut tourner à droite après le feu tricolore FTj. De même, si l'indicateur de changement de direction est activé à gauche par le conducteur, cela peut signifier qu'il veut tourner à gauche après le feu tricolore FTj.

On notera également que dans l'étape du procédé, lorsque le véhicule Vk comprend des moyens d'analyse MAL capables de déterminer la phase de lumière en cours du feu tricolore FTj dans des images acquises dans l'environnement du véhicule Vk, on (les moyens de calcul MCL) peu(ven)t vérifier si cette phase de lumière en cours déterminée par analyse correspond à celle qui est définie par les informations émises par le module de communication MCF de ce feu tricolore FTj. Puis, en cas de correspondance on (les moyens de calcul MCL) peu(ven)t déterminer la vitesse limite vlim. On comprendra en effet qu'il est inutile de déterminer une vitesse limite vlim si la phase de lumière en cours déterminée par l'analyse de l'environnement du véhicule Vk ne correspond pas à celle définie par les informations émises par le feu tricolore FTj, car cela peut signifier que les informations fournies par le feu tricolore FTj sont erronées.

Les images analysées par les moyens d'analyse MAL sont acquises dans la partie avant de l'environnement du véhicule Vk par des moyens d'acquisition MAQ embarqués dans ce dernier (Vk). Ces moyens d'acquisition MAQ comprennent au moins une caméra numérique. Ils peuvent éventuellement faire partie du dispositif d'assistance DA. Mais cela n'est pas obligatoire. En effet, ils peuvent faire partie, totalement ou partiellement, d'au moins un autre équipement embarqué dans le véhicule Vk. Dans ce dernier cas, les fichiers de données définissant les images acquises par les moyens d'acquisition MAQ peuvent, par exemple, être transmis aux moyens d'analyse MAL via un réseau de communication embarqué dans le véhicule Vk et éventuellement multiplexé.

Les moyens d'analyse MAL peuvent faire partie du calculateur CA, comme illustré non limitativement sur l'unique figure, voire du dispositif d'assistance DA. Mais cela n'est pas obligatoire. En effet, ils peuvent faire partie d'un autre calculateur embarqué ou bien comprendre un autre calculateur embarqué.

## Revendications

1. Procédé d'assistance à la conduite d'un véhicule (Vk) comprenant un module de communication (MCV) échangeant des messages par voie d'ondes et se déplaçant sur une voie de circulation (VCm) comprenant au moins un feu tricolore (FTj) comportant un module de communication (MCF) émettant par voie d'ondes des messages contenant des informations définissant les durées respectives de trois phases de lumières rouge, verte et orange et la durée restante de la phase de lumière en cours, ledit procédé comprenant une étape dans laquelle on détermine s'il existe une vitesse limite inférieure à une vitesse maximale autorisée sur ladite voie de circulation (VCm) et permettant audit véhicule (Vk) de passer ledit feu tricolore (FTj) pendant une phase de lumière verte en cours définie par lesdites informations émises, et dans l'affirmative on propose cette vitesse limite déterminée, **caractérisé en ce que** dans ladite étape on détermine ladite vitesse limite en fonction en outre de contraintes dynamiques dudit véhicule (Vk), d'un profil de conduite dudit conducteur, ledit profil de conduite est représentatif d'un mode d'accélération/décélération dudit conducteur, et d'informations de circulation devant ledit véhicule (Vk), et en l'absence d'une telle vitesse limite on détermine et propose un profil de vitesse décroissant permettant d'arrêter ledit véhicule (Vk) à proximité dudit feu tricolore (FTj), et dans lequel
dans ladite étape lorsque ledit véhicule (Vk) comprend des moyens d'analyse (MAL) déterminant ladite phase de lumière en cours dudit feu tricolore (FTj) dans des images acquises dans l'environnement dudit véhicule (Vk), on vérifie si ladite phase de lumière en cours déterminée par analyse correspond à celle définie par lesdites informations émises par ledit module de communication (MCF) du feu tricolore (FTj), et en cas de correspondance on détermine ladite vitesse limite.

2. Procédé selon la revendication 1, **caractérisé en ce que** dans ladite étape on commence par calculer une gamme de vitesses permettant audit véhicule (Vk) de passer ledit feu tricolore (FTj) pendant ladite phase de lumière verte en cours, puis on détermine si ladite gamme de vitesses est applicable compte tenu desdites contraintes dynamiques du véhicule (Vk), dudit profil de conduite du conducteur, desdites informations de circulation devant le véhicule (Vk) et de ladite vitesse maximale autorisée, et dans l'affirmative on détermine et propose une vitesse limite comprise dans ladite gamme de vitesses déterminée, tandis que dans la négative on détermine et propose ledit profil de vitesse décroissant.

3. Procédé selon la revendication 2, **caractérisé en ce que** dans ladite étape on calcule ladite gamme de vitesses en fonction d'une distance en cours séparant ledit véhicule (Vk) dudit feu tricolore (FTj), d'une distance de sécurité et d'au moins une durée restant avant l'expiration de la phase de lumière en cours.

4. Procédé selon l'une des revendications 1 à 3, **caractérisé en ce que** dans ladite étape on propose ladite vitesse limite déterminée audit conducteur et/ou à des moyens de contrôle équipant ledit véhicule (Vk) et contrôlant au moins la vitesse de ce dernier (Vk) pendant une phase de conduite au moins partiellement automatisée.

5. Procédé selon l'une des revendications 1 à 4, **caractérisé en ce que** dans ladite étape, lorsque ladite voie de circulation (VCm) est intersectée par une autre voie de circulation (VCm') juste après ledit feu tricolore (FTj) et que ledit véhicule (Vk) s'apprête à tourner dans cette autre voie de circulation (VCm'), on détermine ladite vitesse limite en fonction en outre d'une vitesse maximale dans ledit tournant.

6. Procédé selon l'une des revendications 1 à 5, **caractérisé en ce que** dans ladite étape lorsque ladite voie de circulation (VCm) est intersectée par une autre voie de circulation (VCm') juste après ledit feu tricolore (FTj) et qu'elle comprend au moins un autre feu tricolore (FTj') placé à côté de ce dernier (FTj) et contrôlant l'accès à cette autre voie de circulation (VCm'), on détermine ladite vitesse limite en fonction en outre d'une information de direction à suivre fournie par ledit conducteur ou d'un état en cours d'un indicateur de changement de direction dudit véhicule (Vk) ou encore d'un historique de données acquises représentatives d'une habitude de direction prise à ladite intersection par ledit véhicule (Vk).

7. Dispositif (DA) d'assistance à la conduite d'un véhicule (Vk) comprenant un module de communication (MCV) étant configuré pour échanger des messages par voie d'ondes et étant configuré pour se déplacer sur une voie de circulation (VCm) comprenant au moins un feu tricolore (FTj) comportant un module de communication (MCF) émettant par voie d'ondes des messages contenant des informations définissant les durées respectives de trois phases de lumières rouge, verte et orange et la durée restante de la phase de lumière en cours, ledit dispositif (DA) comprenant des moyens de calcul (MCL) étant configurés pour déterminer s'il existe une vitesse limite inférieure à une vitesse maximale autorisée sur ladite voie de circulation (VCm) et pour permettre audit véhicule (Vk) de passer ledit feu tricolore (FTj) pendant une phase de lumière verte en cours définie par lesdites informations émises, et dans l'affirmative proposant cette vitesse limite déterminée, **caractérisé en ce que** lesdits moyens de calcul (MCL) sont configurés pour déterminer ladite vitesse limite en fonction en outre de contraintes dynamiques dudit véhicule (Vk), d'un profil de conduite dudit conducteur ledit profil de conduite est représentatif d'un mode d'accélération/décélération dudit conducteur, et d'informations de circulation devant ledit véhicule (Vk), et en l'absence d'une telle vitesse limite déterminent et proposent un profil de vitesse décroissant permettant d'arrêter ledit véhicule (Vk) à proximité dudit feu tricolore (FTj), et dans lequel ledit véhicule (Vk) comprend en outre des moyens d'analyse (MAL) étant configurés pour déterminer ladite phase de lumière en cours dudit feu tricolore (FTj) dans des images acquises dans l'environnement dudit véhicule (Vk), les moyens de calcul (MCL) étant configurés pour vérifier si ladite phase de lumière en cours déterminée par analyse correspond à celle définie par lesdites informations émises par ledit module de communication (MCF) du feu tricolore (FTj), et en cas de correspondance on détermine ladite vitesse limite.

8. Véhicule (Vk) comprenant un module de communication (MCV) étant configuré pour échanger des messages par voie d'ondes et propre à se déplacer sur une voie de circulation (VCm) comprenant au moins un feu tricolore (FTj) comportant un module de communication (MCF) émettant par voie d'ondes des messages contenant des informations définissant les durées respectives de trois phases de lumières rouge, verte et orange et la durée restante de la phase de lumière en cours, **caractérisé en ce qu'**il comprend en outre un dispositif d'assistance (DA) selon la revendication 7.

## Patentansprüche

1. Verfahren zur Unterstützung des Fahrers eines Fahrzeugs (Vk), das ein Kommunikationsmodul (MCV) umfasst, das Nachrichten über Wellen austauscht, und das sich auf einer Verkehrsstraße (VCm) bewegt, die mindestens eine Ampel (FTj) umfasst, die ein Kommunikationsmodul (MCF) umfasst, das über Wellen Nachrichten sendet, die Informationen enthalten, die die jeweiligen Dauern von drei Rotlichtphasen definieren, Grün und Orange und die verbleibende Dauer der aktuellen Lichtphase, wobei das Verfahren einen Schritt umfasst, in dem bestimmt wird, ob es eine Geschwindigkeitsbegrenzung gibt, die niedriger als eine zulässige Höchstgeschwindigkeit auf der Fahrbahn (VCm) ist und es dem Fahrzeug (Vk) erlaubt, die Ampel (FTj) während einer aktuellen grünen Lichtphase, die durch die gesendeten Informationen definiert ist, zu passieren, und bejahendenfalls diese ermittelte Grenzgeschwindigkeit vorgeschlagen wird, **dadurch gekennzeichnet, dass** in dem Schritt die Grenzgeschwindigkeit außerdem in Abhängigkeit von dynamischen Zwängen des Fahrzeugs (Vk), einem Fahrprofil des Fahrers bestimmt wird, wobei das Fahrprofil für einen Beschleunigungs- /Verzögerungsmodus des Fahrers repräsentativ ist, und von Verkehrsinformationen vor dem Fahrzeug (Vk), und in Abwesenheit einer solchen Grenzgeschwindigkeit ein abfallendes Geschwindigkeitsprofil bestimmt und vorgeschlagen wird, das es ermöglicht, das Fahrzeug (Vk) in der Nähe der Ampel (FTj) anzuhalten, und wobei
in dem Schritt, wenn das Fahrzeug (Vk) Analysemittel (MAL) umfasst, die die aktuelle Lichtphase der Ampel (FTj) in Bildern bestimmen, die in der Umgebung des Fahrzeugs (Vk) erfasst werden, überprüft wird, ob die durch Analyse bestimmte aktuelle Lichtphase mit derjenigen übereinstimmt, die durch die von dem Kommunikationsmodul (MCF) der Ampel (FTj) gesendeten Informationen definiert ist, und im Fall einer Übereinstimmung die Grenzgeschwindigkeit bestimmt wird.

2. Verfahren nach Anspruch 1, **dadurch gekennzeichnet, dass** in diesem Schritt zunächst ein Geschwindigkeitsbereich berechnet wird, der es dem Fahrzeug (Vk) ermöglicht, die Ampel (FTj) während der aktuellen Grünlichtphase zu passieren, und dann bestimmt wird, ob dieser Geschwindigkeitsbereich unter Berücksichtigung der dynamischen Einschränkungen des Fahrzeugs (Vk) anwendbar ist, des Fahrprofils des Fahrers, der Verkehrsinformationen vor dem Fahrzeug (Vk) und der zulässigen Höchstgeschwindigkeit, und wenn ja, wird eine Grenzgeschwindigkeit bestimmt und vorgeschlagen, die innerhalb des bestimmten Geschwindigkeitsbereichs liegt, während im negativen Fall das absteigende Geschwindigkeitsprofil bestimmt und vorgeschlagen wird.

3. Verfahren nach Anspruch 2, **dadurch gekennzeichnet, dass** in diesem Schritt der Geschwindigkeitsbereich in Abhängigkeit von einem aktuellen Abstand zwischen dem Fahrzeug (Vk) und der Ampel (FTj), einem Sicherheitsabstand und mindestens einer verbleibenden Zeit bis zum Ablauf der aktuellen Lichtphase berechnet wird.

4. Verfahren nach einem der Ansprüche 1 bis 3, **dadurch gekennzeichnet, dass** in diesem Schritt die ermittelte Grenzgeschwindigkeit dem Fahrer und/oder den Kontrollmitteln, mit denen das Fahrzeug (Vk) ausgestattet ist und die zumindest die Geschwindigkeit des Fahrzeugs (Vk) während einer zumindest teilweise automatisierten Fahrphase kontrollieren, angeboten wird.

5. Verfahren nach einem der Ansprüche 1 bis 4, **dadurch gekennzeichnet, dass** in diesem Schritt, wenn die Fahrspur (VCm) unmittelbar nach der Ampel (FTj) von einer anderen Fahrspur (VCm') gekreuzt wird und das Fahrzeug (Vk) sich anschickt, in diese andere Fahrspur (VCm') abzubiegen, die Grenzgeschwindigkeit zusätzlich in Abhängigkeit von einer Höchstgeschwindigkeit in der Abbiegung bestimmt wird.

6. Verfahren nach einem der Ansprüche 1 bis 5, **dadurch gekennzeichnet, dass** in dem Schritt, wenn die Fahrspur (VCm) unmittelbar nach der Ampel (FTj) von einer weiteren Fahrspur (VCm') gekreuzt wird und mindestens eine weitere Ampel (FTj') umfasst, die neben der letzteren (FTj) angeordnet ist und den Zugang zu dieser weiteren Fahrspur (VCm') steuert, die Grenzgeschwindigkeit außerdem in Abhängigkeit von einer von dem Fahrer gelieferten Information über die zu befolgende Richtung oder von einem aktuellen Zustand eines Richtungsänderungsanzeigers des Fahrzeugs (Vk) oder auch von einem Verlauf erfasster Daten bestimmt wird, die für eine an der Kreuzung von dem Fahrzeug (Vk) eingenommene Richtungsgewohnheit repräsentativ sind.

7. Vorrichtung (DA) zur Unterstützung des Fahrers eines Fahrzeugs (Vk) mit einem Kommunikationsmodul (MCV), das so konfiguriert ist, dass es Nachrichten über Wellen austauscht, und so konfiguriert ist, dass es sich auf einer Verkehrsstraße (VCm) bewegt, die mindestens eine Ampel (FTj) mit einem Kommunikationsmodul (MCF) umfasst, das über Wellen Nachrichten aussendet, die Informationen enthalten, die die jeweiligen Dauern von drei Rotlichtphasen definieren, wobei die Rotlichtphase die Dauer der verbleibenden Zeit ist, Grün und Orange und die verbleibende Dauer der aktuellen Lichtphase umfassen, wobei die Vorrichtung (DA) eine Recheneinrichtung (MCL) umfasst, die so konfiguriert ist, dass sie bestimmt, ob es auf der Fahrbahn (VCm) eine Grenzgeschwindigkeit gibt, die niedriger ist als eine zulässige Höchstgeschwindigkeit, und dem Fahrzeug (Vk) erlaubt, die Ampel (FTj) während einer aktuellen grünen Lichtphase zu passieren, die durch die gesendeten Informationen definiert ist, und bejahendenfalls diese bestimmte Grenzgeschwindigkeit vorschlägt, **dadurch gekennzeichnet, dass** die Berechnungsmittel (MCL) so konfiguriert sind, dass sie die Grenzgeschwindigkeit zusätzlich in Abhängigkeit von dynamischen Zwängen des Fahrzeugs (Vk), einem Fahrprofil des Fahrers, wobei das Fahrprofil für einen Beschleunigungs- /Verzögerungsmodus des Fahrers repräsentativ ist, bestimmen, und von Verkehrsinformationen vor dem Fahrzeug (Vk), und in Abwesenheit einer solchen Grenzgeschwindigkeit ein abfallendes Geschwindigkeitsprofil bestimmen und vorschlagen, das es ermöglicht, das Fahrzeug (Vk) in der Nähe der Ampel (FTj) anzuhalten, und wobei
das Fahrzeug (Vk) ferner Analysemittel (MAL) umfasst, die so konfiguriert sind, dass sie die aktuelle Lichtphase der Ampel (FTj) in Bildern bestimmen, die in der Umgebung des Fahrzeugs (Vk) erfasst werden, wobei die Berechnungsmittel (MCL) so konfiguriert sind, dass sie überprüfen, ob die durch Analyse bestimmte aktuelle Lichtphase mit derjenigen übereinstimmt, die durch die von dem Kommunikationsmodul (MCF) der Ampel (FTj) gesendeten Informationen definiert ist, und im Falle einer Übereinstimmung die Grenzgeschwindigkeit bestimmt wird.

8. Fahrzeug (Vk) mit einem Kommunikationsmodul (MCV), das so konfiguriert ist, dass es Nachrichten über einen Wellenweg austauscht, und das sich auf einer Fahrbahn (VCm) bewegen kann, die mindestens eine Ampel (FTj) mit einem Kommunikationsmodul (MCF) umfasst, das über einen Wellenweg Nachrichten aussendet, die Informationen enthalten, die die jeweiligen Dauern von drei Lichtphasen Rot, Grün und Orange und die Restdauer der aktuellen Lichtphase definieren, **dadurch gekennzeichnet, dass** es außerdem eine Hilfsvorrichtung (DA) nach Anspruch 7 umfasst.

## Claims

1. Method for assisting the driving of a vehicle (Vk) comprising a communication module (MCV) exchanging messages by means of waves and moving on a traffic lane (VCm) comprising at least one traffic light (FTj) having a communication module (MCF) transmitting by means of waves messages containing information defining the respective durations of three phases of red, green and amber lights and the remaining duration of the current light phase, said method comprising a step in which it is determined whether there is a speed limit lower than a maximum authorised speed on said traffic lane (VCm) and whether there is a maximum authorised speed on said traffic lane (VCm), green and amber light phases and the remaining duration of the current light phase, said method comprising a step in which it is determined whether there is a speed limit lower than a maximum speed allowed on said traffic lane (VCm) and allowing said vehicle (Vk) to pass said traffic light (FTj) during a current green light phase defined by said emitted information and in the affirmative this determined limit speed is proposed, **characterized in that** in said step said limit speed is determined as a function further of dynamic constraints of said vehicle (Vk), of a driving profile of said driver, said driving profile is representative of an acceleration/deceleration mode of said driver, and traffic information ahead of said vehicle (Vk), and in the absence of such a speed limit a decreasing speed profile is determined and proposed to stop said vehicle (Vk) in the vicinity of said traffic light (FTj), and wherein
in said step when said vehicle (Vk) comprises analysis means (MAL) determining said current light phase of said traffic light (FTj) in images acquired in the environment of said vehicle (Vk), it is checked whether said current light phase determined by analysis corresponds to that defined by said information emitted by said communication module (MCF) of the traffic light (FTj), and in the case of correspondence said limit speed is determined.

2. Method according to claim 1, **characterised in that** in said step a range of speeds allowing said vehicle (Vk) to pass said traffic light (FTj) during said current green light phase is calculated first, and then it is determined whether said range of speeds is applicable taking into account said dynamic constraints of the vehicle (Vk), said driver's driving profile, said driving conditions, said speed limits, and said speed limit, said driver's driving profile, said traffic information in front of the vehicle (Vk) and said maximum permitted speed, and if so a limit speed within said determined speed range is determined and proposed, while if not said decreasing speed profile is determined and proposed.

3. Method according to claim 2, **characterized in that** in said step said speed range is calculated as a function of a current distance separating said vehicle (Vk) from said traffic light (FTj), of a safety distance and of at least a time remaining before the expiry of the current light phase.

4. Method according to any of claims 1 to 3, **characterized in that** in said step said determined speed limit is proposed to said driver and/or to control means equipping said vehicle (Vk) and controlling at least the speed of the latter (Vk) during an at least partially automated driving phase.

5. Method according to one of claims 1 to 4, **characterized in that** in said step, when said traffic lane (VCm) is intersected by another traffic lane (VCm') just after said traffic light (FTj) and said vehicle (Vk) is about to turn into this other traffic lane (VCm'), said limit speed is determined as a function of furthermore a maximum speed in said turn.

6. Method according to one of claims 1 to 5, **characterized in that** in said step when said traffic lane (VCm) is intersected by another traffic lane (VCm') just after said traffic light (FTj) and comprises at least another traffic light (FTj') placed next to the latter (FTj) and controlling the access to this other traffic lane (VCm'), said limit speed is determined as a function in addition of a maximum speed in said turn, said limit speed is determined further based on a direction-to-follow information provided by said driver or a current status of a direction change indicator of said vehicle (Vk) or a history of acquired data representative of a directional habit taken at said intersection by said vehicle (Vk).

7. Device (DA) for assisting the driving of a vehicle (Vk) comprising a communication module (MCV) being configured to exchange messages by way of waves and being configured to move on a traffic lane (VCm) comprising at least one traffic light (FTj) comprising a communication module (MCF) transmitting by way of waves messages containing information defining the respective durations of three phases of red, green and amber lights and the remaining duration of the current light phase, said device (DA) comprising calculation means (MCL) being configured to determine whether there is a speed limit lower than a maximum authorised speed and to determine the duration of the current light phase, green and amber light phases and the remaining duration of the current light phase, said device (DA) comprising computing means (MCL) being configured to determine whether there is a speed limit lower than a maximum speed allowed on said traffic lane (VCm) and to allow said vehicle (Vk) to pass said traffic light (FTj) during a current green light phase defined by said transmitted information, and in the affirmative proposing this determined limit speed, **characterised in that** said computing means (MCL) is configured to determine said limit speed in function further of dynamic constraints of said vehicle (Vk), a driving profile of said driver said driving profile is representative of an acceleration/deceleration mode of said driver, and traffic information ahead of said vehicle (Vk), and in the absence of such a speed limit determine and propose a decreasing speed profile allowing to stop said vehicle (Vk) in the proximity of said traffic light (FTj), and wherein
said vehicle (Vk) further comprises analysing means (MAL) being configured to determine said current light phase of said traffic light (FTj) in images acquired in the environment of said vehicle (Vk), the calculating means (MCL) being configured to check whether said current light phase determined by analysis corresponds to that defined by said information emitted by said communication module (MCF) of the traffic light (FTj), and in case of correspondence said speed limit is determined.

8. Vehicle (Vk) comprising a communication module (MCV) being configured to exchange messages by means of waves and suitable for moving on a traffic lane (VCm) comprising at least one traffic light (FTj) having a communication module (MCF) transmitting by means of waves messages containing information defining the respective durations of three phases of red, green and amber light and the remaining duration of the current light phase, **characterized in that** it further comprises an assistance device (DA) according to claim 7.
